# EUROPÄISCHE PATENTANMELDUNG

(11) **EP 1 347 272 A2**
(43) Veröffentlichungstag der Anmeldung: **24.09.2003**
(21) Anmeldenummer: 03003862.4
(22) Anmeldetag: 20.02.2003
(51) Int. Cl.: G01F 15/06

(54) **Vorrichtung zum Fernmessen von Veränderungen physikalischer Grössen**

(30) Priorität: 18.03.2002 DE 10212318
(71) Anmelder: WIKON Kommunikationstechnik GmbH, 67661 Kaiserslautern (DE)
(72) Erfinder: Beyer, Hans-Jörg, 67661 Kaiserslautern (DE); Konzelmann, Andreas, 66424 Homburg (DE); Molz, Joachim, 54296 Trier (DE)
(74) Vertreter: Klein, Friedrich

(57) **Zusammenfassung**

Die Erfindung betrifft eine Vorrichtung zum Fernmessen, Fernzählen und/oder Fernmelden von Veränderungen physikalischer Größen und/oder Zuständen an zu überwachenden Objekten, wobei alle Funktionsteile innerhalb eines in sich geschlossenen Gehäuses aufgenommen sind und die von einem Sensor erzeugten Signale über eine Datenverarbeitungseinrichtung mit einem Datenspeicher, ein Funkmodul mit einer diesem zugeordneten Antenne weiter geleitet werden, wobei ein Schaltkreis einer Energiequelle in Abhängigkeit vom Signalfluß vom Sensor zur Datenverarbeitungseinrichtung oder durch eine Echtzeituhr beeinflußt wird, um die Datenverarbeitungseinrichtung und das Funkmodul zu aktivieren.

## Beschreibung

Die Erfindung betrifft eine Vorrichtung zum Fernmessen, Fernzählen und/ oder Fernmelden von Veränderungen physikalischer Größen und/oder Zuständen an zu überwachenden Objekten.

In der DE 299 14 656 U1 ist eine Vorrichtung zur Wasserstandsüberwachung in einem mit einem entfernbaren Deckel verschlossenen Schacht gezeigt, bei der ein Wasserdedektor in einer bestimmten Höhe oberhalb des Schachtbodens angeordnet ist. Der Wasserdedektor ist mit einem im Schacht angeordneten Signalgeber verbunden, dessen Signal ohne Öffnen des Schachtes von außerhalb des Schachtes erfaßbar ist.

Hierzu ist der Wasserdedektor so angeordnet, daß bei Erreichen einer kritischen Höhe des Wasserspiegels der Sensor ein Signal abgibt, das über ein elektrisches Kabel dem Signalgeber zugeführt wird. Der mit diesem gekoppelte Sender überträgt das Signal zu dem außerhalb des Schachtes gelegenen Empfangsgerät, das als Handgerät ausgebildet sein kann. Sofern der Schacht mit einem metallischen Deckelrahmen versehen ist, können dieser und der Deckel zwar als Antenne genutzt werden, jedoch ist dabei nachteilig, daß der Deckel und/oder der Deckelrahmen über ein frei im Schacht hängendes Antennenkabel mit dem Sender verbunden werden müssen, wodurch dieses insbesondere bei innerhalb des Schachtes durchzuführenden Wartungsarbeiten sehr leicht beschädigt werden kann.

Zum Fernauslesen von Verbrauchszählern, beispielsweise zum Fernauslesen von Gaszählern sind entsprechende Vorrichtungen unterschiedlicher Bauart bekannt.
So sind beispielsweise Vorrichtungen bekannt, bei welchen ein Sensor am Verbrauchszähler montiert und durch eine Kabelverbindung mit der Datenverarbeitungseinrichtung verbunden wird. Die Datenübertragung erfolgt hierbei meist mittels eines Modems an einen analogen Telefonanschluß. Datenverarbeitungseinrichtung, Modem und Telefonanschluß sind dabei über Kabel miteinander verbunden. Vorrichtungen dieser Art erfordern daher bei ihrem Betrieb eine relativ hohe Fremdenergie, sodaß zu ihrem Einsatz ein Netzanschluß vorhanden sein muß, oder ein solche erst geschaffen werden muß. Da aus Sicherheitsgründen üblicher Weise in unmittelbarer Nähe zu Gaszählern eine solche Anschlußmöglichkeit nicht vorhanden ist, sind zu ihrer Montage meist elektrische Installationsarbeiten mit entsprechender elektrischer Verkabelung der jeweiligen Vorrichtung zum Fernauslesen der Zähler erforderlich. Diese Arbeiten und die damit verbundenen Umstände und Kosten stehen einer weiten Verbreitung solcher Vorrichtungen hindernd im Wege.

Der Erfindung liegt daher die Aufgabe zugrunde, eine Vorrichtung zum Fernmessen, Fernzählen und/oder Fernmelden von Veränderungen physikalischer Größen und/oder Zuständen an zu überwachenden Objekten zu schaffen, die einerseits eine umfangreiche Verkabelung bei ihrer Montage vermeidet und andererseits einen nur geringen Energiebedarf aufweist. Auch soll ihre Verbindung mit dem auszulesenden Verbrauchszähler möglichst einfach und ohne besondere Fachkenntnisse durchführbar sein.

Diese Aufgabe wird erfindungsgemäß durch eine Vorrichtung gelöst, die folgende Merkmale aufweist:
ein in sich geschlossenes Gehäuse mit mindestens einem innerhalb des Gehäuses oder an einer seiner Außenflächen angeordneten Sensor zur Erzeugung von Veränderungen der physikalischen Größen und/oder des Zustandes des zu überwachenden Objektes entsprechenden Signalen;
eine innerhalb des Gehäuses angeordnete Einrichtung zum Verarbeiten der vom Sensor ausgehenden Signale;
eine innerhalb des Gehäuses angeordnete Datenverarbeitungseinrichtung mit einen Datenspeicher zur Speicherung der den verarbeiteten Signalen entsprechenden Daten;
ein innerhalb des Gehäuses angeordnetes Funkmodul, das mit der Datenverarbeitungseinrichtung verbunden ist;
eine innerhalb des Gehäuses angeordnete und dem Funkmodul nachgeordnete Antenne.
eine innerhalb des Gehäuses angeordnete Spannungsversorgung für den Betrieb der Datenverarbeitungseinrichtung und des Funkmoduls;
einen in Abhängigkeit vom Signalfluß vom Sensor zur Datenverarbeitungseinrichtung durch diese oder durch eine Echtzeituhr beeinflussbaren Schaltkreis zur Aktivierung der Datenverarbeitungseinrichtung und des Funkmoduls;

Durch die Maßnahme, sämtliche Funktionsteile der Vorrichtung innerhalb eines geschlossenen Gehäuses anzuordnen, werden bei ihrer Montage sämtliche Verkabelungen der einzelnen Funktionsteile vermieden. Vielmehr können diese schon bei der Herstellung der Vorrichtung werksseitig vorgenommen und dementsprechend rationell hergestellt werden.

Da das Gehäuse schon werksseitig vollständig, montiert werden kann, kann es schon werksseitig luft- und auch wasserdicht verschlossen werden und ist daher auch für eine Montage im Freien besonders geeignet. Auch ist durch die erfindungsgemäße Maßnahme nicht nur die Erstmontage der Vorrichtung, sondern auch ihr Austausch, beispielsweise bei der Nachei-chung, besonders einfach und kostengünstig.

Durch die Maßnahme, zur Aktivierung der Datenverarbeitungseinrichtung und des Funkmoduls einen Schaltkreis vorzusehen, der durch den Signalfluß vom Sensor zur Datenverarbeitungseinrichtung oder durch eine Echtzeituhr beeinflussbar ist, die Datenverarbeitungseinrichtung und auch das Funkmodul also dann, wenn kein Verbrauch und auch kein Auslesen des Verbrauchszählers erfolgt, praktisch still zu setzen, ergibt sich eine sehr hohe Reduzierung des Energieverbrauches auf bis zu 0,1 Prozent (Faktor 1000 !).
Diese enorme Energieeinsparung ermöglicht es, auf die Zufuhr von Fremdenergie zu verzichten und den Energiebedarf der Vorrichtung durch eine innerhalb des Gehäuses angeordnete Energiequelle beispielsweise eine Batterie oder eine Brenstoffzelle zu decken. Als Batterie wird vorzugsweise eine Lithium-Batterie mit sehr geringer Selbstentladung verwendet Damit kann das Gehäuse an seinen Wandungen völlig frei von Kabeldurchführungen bleiben. Irgend welche fachmännisch auszuführende Verkabelungen oder sonstige Anschlußarbeiten entfallen vollständig

Durch die Maßnahme, die Datenverarbeitungseinrichtung und das Funkmodul nicht nur durch den Signalfluß vom Sensor zur Datenverarbeitungseinrichtung, sondern auch durch ein von der Echtzeituhr ausgehendes Signal aktivieren zu können, bietet sich die Möglichkeit, die Datenfernauslesung entweder in vorbestimmbaren Intervallen oder auch zu bestimmten Terminen durchzuführen.

Um das Fernauslesen mehrerer Verbrauchszähler durch jeweils eine erfindungsgemäße Vorrichtung zum exakt gleichen Zeitpunkt durchführen zu können, ist es zweckmäßig, wenn der Echtzeituhr zu ihrer Synchronisierung ein Funkuhrenempfänger zugeordnet ist. Auch kann die Synchronisierung der Echtzeituhr mittels einer über das Funknetz erreichbaren Referenzzeitangabe erfolgen.

Da die erfindungsgemäße Vorrichtung bei ihrem Zusammenbau mit dem entsprechenden Verbrauchszähler nur an diesem funktionsgerecht befestigt werden muß, kann sie schon werksseitig mit dem Verbrauchszähler zu einer Baueinheit zusammengefaßt werden. Dies geschieht in einfacher Weise dadurch, daß das Gehäuse des Verbrauchszählers und das Gehäuse der Vorrichtung mittels einer mechanischen Steckverbindung oder mittels einer Rastverbindung lösbar miteinander verbunden sind.

Dabei ist es zweckmäßig, die Verbindung zwischen dem Gehäuse des Verbrauchszählers und dem Gehäuse der Vorrichtung mittels einer Plombe gegen unbefugtes Lösen zu sichern.

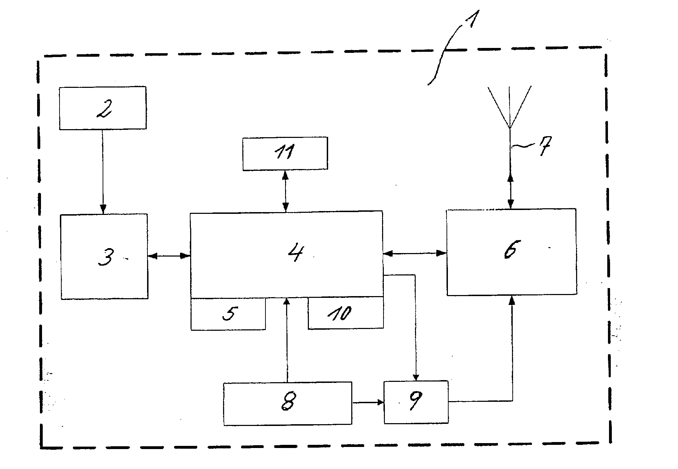

Weitere Vorteile und Details der Erfindung ergeben sich anhand der nachfolgenden Beschreibung eines in der beigefügten Zeichnung dargestellten Funktionsprinzips einer beispielsweisen Ausführungsform derselben.

In der Zeichnung ist in Strichlinien der Umriß eines Gehäuses 1 dargestellt, das in an sich bekannter Weise ein Unterteil und ein damit lösbar verbundenes Oberteil aufweist. Sämtliche funktionswichtigen Teile der erfindungsgemäßen Vorrichtung sind innerhalb des Gehäuses 1 angeordnet.

Im Gehäuse 1 ist ein Sensor 2 angeordnet, der mit einem Signalgeber eines Verbrauchszählers zusammenwirkt. Der Verbrauchszähler kann in bekannter Weise ein Zählwerk mit rotierenden Scheiben aufweisen, dessen die kleinste Verbrauchseinheit anzeigende Scheibe an ihrem Umfang mit Magneten belegt ist. Die Anordnung der Magnete ist dabei so getroffen, daß deren Polarität nach jedem Teilschritt der Scheibe wechselt.

Der Sensor 2 wird in diesem Fall von einem Reed-Kontakt gebildet, der bei jedem Wechsel der Polarität des Magneten umschaltet, sodaß von jedem Teilschritt der Scheibe ein Zählimpuls ableitbar ist.

Dem Sensor 2 ist eine Signalverarbeitungseinrichtung 3 nachgeordnet, die mit einer Datenverarbeitungseinrichtung 4 verbunden ist. Die Signalverarbeitungseinrichtung 3 kann selbstverständlich auch in die Datenverarbeitungseinrichtung 4 integriert sein. In der Signalverarbeitungseinrichtung 3 wird von jedem vom Sensor 2 ausgehenden Signal und damit pro Teilschritt der Scheibe des Zählwerkes ein Zählimpuls gebildet, der im Datenspeicher 5 der Datenverarbeitungseinrichtung 4 abgelegt wird. Die Datenverarbeitungseinrichtung 4 ist mit einem Funkmodul 6 verbunden, dem eine Antenne 7 zugeordnet ist. Bei dem Funkmodul 6 kann es sich um ein Funkmodul für GSM oder für ein ähnlich leistungsstarkes Netz handeln. Über das Funkmodul 6 werden die aus dem Datenspeicher 5 auslesbaren Daten nach außen, beispielsweise in eine Überwachungs- oder Abrechnungszentrale geleitet. Über das Funkmodul 6 können auch Signale von außen empfangen und an die Datenverarbeitungseinrichtung 4 weitergeleitet werden, die diese dann umsetzt.

Zum Betrieb der Datenverarbeitungseinrichtung 4 und auch des Funkmoduls 6 ist eine Spannungsversorgung 8 vorgesehen, die mit der Datenverarbeitungseinrichtung 4 und dem Funkmodul 6 mittels eines Schaltkreises 9 verbunden ist. Die Spannungsversorgung 8 kann von einer Batterie oder einer Brennstoffzelle gebildet sein. Vorzugsweise wird eine Lithium-Batterie hoher Kapazität mit relativ hoher Stoßbelastbarkeit verwendet, die über einen großen Temperaturbereich leistungsstark ist und eine geringe Selbstentladüng aufweist.

Um den Energieverbrauch der Vorrichtung möglichst gering zu halten, ist das Funkmodul 6 größtenteils inaktiv und wird von der Datenverarbeitungseinrichtung 4 nur im Bedarfsfall aktiviert. Dies erfolgt bei zeitgesteuertem Bedarf über ein Signal einer Echtzeituhr 10 oder durch den Signalfluß vom Sensor 2 über einen Schaltkreis 9.
Auch die Datenverarbeitungseinrichtung 4 ist größtenteils inaktiv. Sie wird ebenfalls nur aktiviert durch ein Signal des Sensors 2 oder durch ein Signal der Echtzeituhr 10. Ist die Datenverarbeitung beendet, so wird die Datenverarbeitungseinrichtung 4 wieder inaktiv.

Hierdurch wird erreicht, daß die Datenverarbeitungseinrichtung 4 und das Funkmodul 6 nur solange Energie verbrauchen, wie die Datenverarbeitungseinrichtung 4 aktiv ist. Da der vom Verbrauchszähler zu messende Verbrauch sich im allgemeinen auf eine nur sehr geringe Zeitspanne pro Tag erstreckt, ist sowohl die Datenverarbeitungseinrichtung 4 als auch das Funkmodul 6 die weitaus größte Zeit eines Tages inaktiv, wodurch sich eine enorme Entlastung der Batterie und damit eine dementsprechende Verlängerung der Lebensdauer der Batterie ergibt.
Damit kann selbst bei wöchentlicher Fernauslesung des Verbrauchszählers eine Lebensdauer der Batterie von ca 8 Jahren erreicht werden, sodaß der Batteriewechsel praktisch zusammen mit dem zur Wartung und Eichung des Verbrauchszählers notwendigen Wechsel desselben durchgeführt werden kann.

Um auch unabhängig vom jeweiligen Zeitpunkt des Signalflusses zu bestimmten Terminen oder Uhrzeiten eine Fernauslesung des Verbrauchszählers durchführen zu können, ist die Datenverarbeitungseinrichtung 4 mit einer Echtzeituhr 10 ausgestattet, deren Signale ebenfalls auf den Schaltkreis 9 derart wirken, daß dieser auch unabhängig vom Signalfluß zur Datenverarbeitungseinrichtung 4 geschlossen werden kann, um diese und auch das Funkmodul 6 hierdurch kurzzeitig für eine Fernauslesung zu aktivieren. Auch hier wird der Schaltkreis 9 unmittelbar nach Ende der Datenübertragung wieder geöffnet, wodurch die Datenverarbeitungseinrichtung 4 und das Funkmodul 6 inaktiv werden.

Zur Synchronisierung der Echtzeituhr 10 ist ein nicht näher dargestellter Funkuhrenempfänger vorgesehen. Anstelle des Funkuhrenempfängers kann zur Synchronisierung der Echtzeituhr 10 auch eine über das Funknetz erreichbare Referenzzeitangabe dienen.
Am Gehäuse 1 kann ein Anzeige- und Bedienfeld 11 vorgesehen sein, dessen Anzeige- und Bedienelemente mit der Datenverarbeitungseinrichtung 4 verbunden sind.

In einer bevorzugten Ausführungsform der Erfindung ist das Gehäuse 1 der Vorrichtung mittels einer mechanischen Steckverbindung oder mittels einer Rastverbindung mit dem Gehäuse des Verbrauchszählers lösbar verbunden. Die Verbindung zwischen dem Gehäuse des Verbrauchszählers und dem Gehäuse 1 der Vorrichtung kann mittels einer Plombe gegen unbefugtes Lösen gesichert sein.

Die Erfindung wurde vorstehend anhand einer beispielhaften Anwendung im Zusammenhang mit dem Auslesen eines Verbrauchszählers erläutert.
Ihre Anwendung ist jedoch nicht auf einen solchen Anwendungsfall beschränkt. Vielmehr läßt sich die Erfindung überall dort anwenden, wo es um die Überwachung eines Zustandswechsels oder einer Grenzwertüberschreitung geht. Auch läßt sie sich überall dort anwenden, wo lediglich zeitlich konfigurierbare Routinekontrollen erforderlich sind.

## Patentansprüche

1. Vorrichtung zum Fernmessen, Fernzählen und/oder Fernmelden von Veränderungen physikalischer Größen und/oder Zuständen an zu überwachenden Objekten, aufweisend
ein in sich geschlossenes Gehäuse (1) mit mindestens einem innerhalb des Gehäuses (1) oder an einer seiner Außenflächen angeordneten Sensor zur Erzeugung von den Veränderungen der physikalischen Größen und/oder des Zustandes des zu überwachenden Objektes entsprechenden Signalen;
eine innerhalb des Gehäuses (1) angeordnete Einrichtung zum Verarbeiten der vom Sensor ausgehenden Signale (Signalverarbeitungseinrichtung 3);
eine innerhalb des Gehäuses (1) angeordnete Datenverarbeitungseinrichtung (4) mit einem Datenspeicher (5) zur Speicherung der den verarbeiteten Signalen entsprechenden Daten;
ein innerhalb des Gehäuses (1) angeordnetes Funkmodul (6), das mit der Datenverarbeitungseinrichtung (4) verbunden ist;
eine innerhalb des Gehäuses (1) angeordnete und dem Funkmodul (6) nachgeordnete Antenne (7).
eine innerhalb des Gehäuses angeordnete Spannungsversorgung (8) für den Betrieb der Datenverarbeitungseinrichtung (4) und des Funkmoduls (6);
einen in Abhängigkeit vom Signalfluß vom Sensor (2) zur Datenverarbeitungseinrichtung (4) durch diese oder durch eine Echtzeituhr (10) beeinflussbaren Schaltkreis (9) zur Aktivierung des Funkmoduls (6);

2. Vorrichtung nach Anspruch 1, **dadurch gekennzeichnet, daß** der Echtzeituhr (10) ein Funkuhrenempfänger zugeordnet ist.

3. Vorrichtung nach Anspruch 1, **dadurch gekennzeichnet, daß** die Echtzeituhr (10) mittels einer über das Funknetz erreichbaren Referenzzeitangabe synchronisierbar ist.

4. Vorrichtung nach Anspruch 1, **dadurch gekennzeichnet, daß** zur Spannungsversorgung (8) eine Batterie mit sehr geringer Selbstentladung dient.

5. Aus einem Verbrauchszähler und einer Vorrichtung zum Fernmessen, Fernzählen und/oder Fernmelden von Veränderungen physikalischer Größen und/oder Zuständen an zu überwachenden Objekten bestehende Baueinheit, aufweisend
ein in sich geschlossenes Gehäuse (1) mit mindestens einem innerhalb des Gehäuses (1) oder an einer seiner Außenflächen angeordneten Sensor zur Erzeugung von den Veränderungen der physikalischen Größen und/oder des Zustandes des zu überwachenden Objektes entsprechenden Signalen;
eine innerhalb des Gehäuses (1) angeordnete Einrichtung zum Verarbeiten der vom Sensor ausgehenden Signale (Signalverarbeitungseinrichtung 3);
eine innerhalb des Gehäuses (1) angeordnete Datenverarbeitungseinrichtung (4) mit einem Datenspeicher (5) zur Speicherung der den verarbeiteten Signalen entsprechenden Daten;
ein innerhalb des Gehäuses (1) angeordnetes Funkmodul (6), das mit der Datenverarbeitungseinrichtung (4) verbunden ist;
eine innerhalb des Gehäuses (1) angeordnete und dem Funkmodul (6) nachgeordnete Antenne (7).
eine innerhalb des Gehäuses angeordnete Spannungsversorgung (8) für den Betrieb der Datenverarbeitungseinrichtung (4) und des Funkmoduls (6);
einen in Abhängigkeit vom Signalfluß vom Sensor (2) zur Datenverarbeitungseinrichtung (4) durch diese oder durch eine Echtzeituhr (10) beeinflussbaren Schaltkreis (9) zur Aktivierung des Funkmoduls (6), wobei
das Gehäuse (1) der Vorrichtung mittels einer mechanischen Steckverbindung oder mittels einer Rastverbindung mit dem Gehäuse des Verbrauchszählers lösbar verbunden ist.

6. Baueinheit nach Anspruch 5, **dadurch gekennzeichnet, daß** die Verbindung zwischen dem Gehäuse des Verbrauchszählers und dem Gehäuse (1) der Vorrichtung mittels einer Plombe gegen unbefugtes Lösen gesichert ist.
